# EUROPEAN PATENT APPLICATION

(11) **EP 3 846 071 A1**
(43) Date of publication of application: **07.07.2021**
(21) Application number: 19932282.7
(22) Date of filing: 08.11.2019
(51) Int. Cl.: G06K 9/00

(54) **OPTICAL FINGERPRINT RECOGNITION APPARATUS AND ELECTRONIC DEVICE**

(71) Applicant: Shenzhen Goodix Technology Co., Ltd., Futian Free Trade Zone Shenzhen, Guangdong 548045 (CN)
(72) Inventor: ZHOU, Fei, Shenzhen, Guangdong 518045 (CN); CHI, Wenming, Shenzhen, Guangdong 518045 (CN); ZENG, Honglin, Shenzhen, Guangdong 518045 (CN); WANG, Bingwen, Shenzhen, Guangdong 518045 (CN)
(74) Representative: Lam, Alvin
(86) International application number: PCT/CN2019/116584
(87) International publication number: WO 2021/087951

(57) **Abstract**

The present application provides an optical fingerprint identification apparatus and an electronic device. The optical fingerprint identification apparatus includes a fingerprint identification module for being disposed under a backlight module of the liquid crystal display, and a fingerprint detection area thereof is at least partially located in a display area of the display. The fingerprint identification module includes an optical sensor and a light source disposed adjacent to the optical sensor; the light source is used to emit a detection light to the fingerprint detection area of the liquid crystal display, and the detection light passes through the liquid crystal display via a transmission part of the backlight module and irradiates to a finger above the liquid crystal display to form a fingerprint detection light carrying fingerprint information of the finger; and the optical sensor is used to receive the fingerprint detection light to acquire the fingerprint information of the finger; where the fingerprint detection light passes through the liquid crystal display and is transmitted to the optical sensor via the transmission part of the backlight module. Since the light source is located at the bottom of the backlight module, and the space at the outer edge of the display module is not increased, and the chin area of the electronic device is reduced, improving the screen-to-body ratio of the electronic device.

## Description

### TECHNICAL FIELD

The present application relates to the field of biometric identification technology, and in particular, to an optical fingerprint identification apparatus and an electronic device suitable for a liquid crystal display.

### BACKGROUND

As users pursue a high screen-to-body ratio for mobile phones and other electronic devices, under-screen fingerprint identification apparatuses are gradually being applied to various electronic devices.

Generally speaking, a mobile phone that supports the function of under-screen fingerprint identification includes a fingerprint identification module, a display panel, and a backlight module located under the display panel. The fingerprint identification module includes a sensor and a light source; the sensor is located under the backlight module, the light source is disposed on a side of the display panel, and the light emitted by the light source can return from the display panel after being transmitted or scattered by a fingerprint and irradiate to the sensor under the backlight module, thus realizing fingerprint identification.

However, the mobile phone mentioned above requires to occupy a certain space of the chin of the mobile phone because the light resource is disposed on the side of the display panel, which causes the chin area of the mobile phone to be too wide and affects the overall screen-to-body ratio of the mobile phone.

### SUMMARY

The present application provides an optical fingerprint identification apparatus and an electronic device to overcome the problem of excessively wide chin area affecting the screen-to-body ratio of the electronic device in the prior art.

An embodiment of the present application provides an optical fingerprint identification apparatus which is suitable for an electronic device with a liquid crystal display to realize under-screen optical fingerprint detection. The optical fingerprint identification apparatus includes a fingerprint identification module for being disposed under a backlight module of the liquid crystal display, and a fingerprint detection area thereof is at least partially located in a display area of the display; where the fingerprint identification module includes an optical sensor and a light source disposed adjacent to the optical sensor; the light source is used to emit a detection light to the fingerprint detection area of the liquid crystal display, and the detection light passes through the liquid crystal display via a transmission part of the backlight module and irradiates to a finger above the liquid crystal display to form a fingerprint detection light carrying fingerprint information of the finger; and the optical sensor is used to receive the fingerprint detection light to acquire the fingerprint information of the finger; where, the fingerprint detection light passes through the liquid crystal display and is transmitted to the optical sensor via the transmission part of the backlight module.

The optical fingerprint identification apparatus as described above, where the optical sensor is used to be carried on a flexible circuit board and electrically connected with the flexible circuit board, and the optical sensor includes: an optical sensing array with multiple optical sensing units; and an optical path guiding structure formed above the optical sensing array; and the optical path guiding structure is used to guide the fingerprint detection light passing through the liquid crystal display to the optical sensing array.

The optical fingerprint identification apparatus as described above, where the optical path guiding structure includes: a macro lens with at least one spherical or aspherical lens; and a lens cone or a lens holder for carrying the macro lens; where the lens cone or the lens holder is disposed above the flexible circuit board and forms a closed space with the flexible circuit board, and the optical sensing array is disposed in the closed space and is located in a converging optical path of the macro lens; where the macro lens is used to guide or converge the fingerprint detection light transmitted through the liquid crystal display to the optical sensing array to realize optical fingerprint imaging of the finger on the optical sensing array.

The optical fingerprint identification apparatus as described above, where the optical path guiding structure includes an optical path guiding layer formed above the optical sensing array by a semiconductor process, the optical path guiding layer includes: a microlens array; and multiple light blocking layers located between the microlens array and the optical sensing array; where the multiple light blocking layers respectively define multiple transmission optical paths between the microlens array and the optical sensing array through openings, and each microlens of the microlens array is used to focus the fingerprint detection light to a corresponding transmission optical path of the microlens and transmit the fingerprint detection light to a corresponding optical sensing unit via the transmission optical path.

The optical fingerprint identification apparatus as described above, where the optical sensor further includes a filter, and the filter is formed above the optical sensing array or the optical path guiding structure by coating and is used to filter out an interference light entering the optical sensing array.

The optical fingerprint identification apparatus as described above, where the transmission part of the backlight module includes: a first through-hole; and a second through-hole; where the first through-hole and the second through-hole are formed on the a support plate of the backlight module, and correspond to the optical sensor and the light source, respectively; where the detection light emitted by the light source enters the backlight module via the second through-hole and irradiates to the fingerprint detection area to form the fingerprint detection light on the finger, and the fingerprint detection light is transmitted to the optical sensor via the first through-hole.

The optical fingerprint identification apparatus as described above, where a first light absorbing layer is formed on an upper surface of the support plate, and the first light absorbing layer covers at least an area which is between the first through-hole and the second through-hole and is in the upper surface of the support plate.

The optical fingerprint identification apparatus as described above, where the first light absorbing layer is a film layer formed of a material that absorbs light, and is used to absorb a light which is reflected by an optical film of the backlight module to the support plate from the detection light emitted by the light source, so as to reduce an interference light formed by a secondary reflection of the light on the support plate.

The optical fingerprint identification apparatus as described above, where the first light absorbing layer extends toward an edge of the support plate and covers an entire upper surface of the support plate.

The optical fingerprint identification apparatus as described above, where a second light absorbing layer is formed on a lower surface of the support plate, and the second light absorbing layer covers at least an area which is between the first through-hole and the second through-hole and is in the lower surface of the support plate.

The optical fingerprint identification apparatus as described above, where the second light absorbing layer is a film layer formed of a material that absorbs light, and is used to absorb a light which irradiates on the lower surface of the support plate from the detection light emitted by the light source, so as to reduce an interference light formed by a reflection of the light on the lower surface of the support plate.

The optical fingerprint identification apparatus as described above, where the second light absorbing layer extends toward an edge of the support plate and covers an entire lower surface of the support plate.

The optical fingerprint identification apparatus as described above, where the optical sensor and the light source are installed at the position of a middle frame of the electronic device away from the backlight module, and the middle frame is provided with a first connecting hole corresponding to the first through-hole and a second connecting hole corresponding to the second through-hole; where the first connecting hole is used to allow the fingerprint detection light to enter the optical sensor through the middle frame, and the second connecting hole is used to allow the detection light emitted by the light source to irradiate to the fingerprint detection area through the middle frame.

The optical fingerprint identification apparatus as described above, where there is a gap between the middle frame and the support plate, and the gap is provided with a third light absorbing layer which is a film layer formed of a material that absorbs light and is used to absorb an interference light entering the optical sensor via the gap.

The optical fingerprint identification apparatus as described above, where the lower surface of the middle frame is provided with a first light absorbing member which is used to be disposed at periphery of the optical sensor and forms, with the middle frame, a first accommodation cavity with the first connecting hole as an opening, and the optical sensor is disposed in the first accommodation cavity.

The optical fingerprint identification apparatus as described above, where a bottom surface of the middle frame is provided with a second light absorbing member which is used to be disposed at periphery of the light source and forms, with the middle frame, a second accommodation cavity with the second connecting hole as an opening, and the light source is disposed in the second accommodation cavity.

The optical fingerprint identification apparatus as described above, where the first light absorbing member and the second light absorbing member are connected into a whole to form an integrated light absorbing assembly for accommodating the light source and the optical sensor.

The optical fingerprint identification apparatus as described above, where a light emitting surface of the light source is inclined towards a direction close to the optical sensor, there is a first angle between an axis of the light source and a first direction perpendicular to the support plate, and a receiving plane of the optical sensor is perpendicular to the first direction.

The optical fingerprint identification apparatus as described above, where the first angle is less than 60°.

The optical fingerprint identification apparatus as described above, where there is an interval with a first size between a light emitting surface of the light source and an upper surface of the support plate, and the first size is less than 3 mm.

The optical fingerprint identification apparatus as described above, where an interval between the light source and the optical sensor is 5-15 mm.

The optical fingerprint identification apparatus as described above, where the optical sensor is disposed directly below the fingerprint detection area to realizing receiving, in a vertical way, the fingerprint detection light passing through the liquid crystal display.

The optical fingerprint identification apparatus as described above, where a center of the optical sensor is deviated from a center of the fingerprint detection area to realize receiving, through a tilt angle, the fingerprint detection light passing through the liquid crystal display.

The optical fingerprint identification apparatus as described above, where the light source is a single light source, and the single light source is located between the fingerprint detection area and a chin area of the electronic device, and a distance from the single light source to a center of the fingerprint detection area ranges from 8 mm to 12 mm.

The optical fingerprint identification apparatus as described above, where a number of the light source is multiple, and the multiple light sources are disposed at intervals and are located around the fingerprint detection area, so as to respectively emit a detection light to the fingerprint detection area through a different irradiation angle; the support plate is correspondingly formed with multiple second through-holes, and each second through-hole is used to allow a detection light emitted by a corresponding light source to pass through and irradiate to the fingerprint detection area at a preset angle.

The optical fingerprint identification apparatus as described above, where the light sources include a first light source, a second light source and a third light source; where the first light source, the second light source and the third light source are disposed in a delta shape; the first light source and the second light source are located at opposite sides of the fingerprint detection area; and the third light source is located between the fingerprint detection area and the chin area of the electronic device.

The optical fingerprint identification apparatus as described above, where the optical fingerprint identification apparatus further includes a controller connected with the optical sensor and the multiple light sources, where the controller is used to control the third light source to light up when detecting that a finger touches the fingerprint detection area, control the optical sensor to perform fingerprint collecting to acquire a first fingerprint, and control the third light source to turn off after the first fingerprint is collected; the controller is further used to control the second light source to light up when the first fingerprint is unsuccessfully matched with a target fingerprint, control the optical sensor to perform fingerprint collecting to acquire a second fingerprint, and control the second light source to turn off after the second fingerprint is collected; and the controller is further used to control the first light source to light up when the second fingerprint is unsuccessfully matched with the target fingerprint, control the optical sensor to perform fingerprint collecting to acquire a third fingerprint, and control the first light source to turn off after the third fingerprint is collected.

The optical fingerprint identification apparatus as described above, where the fingerprint identification module includes at least one light emitting group; where each light emitting group includes at least two light sources disposed at intervals; and
a main light emitting angle of each light source is set towards the fingerprint detection area, where an interval between two adjacent light sources ranges from 5 to 10 mm.

The optical fingerprint identification apparatus as described above, where the light emitting group is between the fingerprint detection area and a chin area of the electronic device, and at least two light sources of the light emitting group are disposed at intervals along a lateral direction parallel to the chin area of the electronic device; and a second angle between each light source and the lateral direction is less than 10°.

The optical fingerprint identification apparatus as described above, where the fingerprint identification module includes two light emitting groups, the two light emitting groups are disposed at intervals along a lateral direction parallel to a chin area of the electronic device, and are respectively located at two opposite sides of the fingerprint detection area, and at least two light sources of each light emitting group are disposed at intervals along a longitudinal direction perpendicular to the chin area of the electronic device.

The optical fingerprint identification apparatus as described above, where the optical fingerprint identification apparatus further includes a controller, the optical fingerprint module includes a first light emitting group and a second light emitting group, and the controller is connected with the optical sensor, the first light emitting group and the second light emitting group; where the controller is used to control all light sources in the first light emitting group to light up at the same time when detecting that a finger touches the fingerprint detection area, control the optical sensor to perform fingerprint collecting to acquire a first fingerprint, and control all light sources in the first light emitting group to turn off after the first fingerprint is collected; and the controller is further used to control all light sources in the second light emitting group to light up at the same time when the first fingerprint is unsuccessfully matched with a target fingerprint, control the second light emitting group to perform fingerprint collecting to acquire a second fingerprint, and control all light sources in the second light emitting group to turn off after the second fingerprint is collected.

The optical fingerprint identification apparatus as described above, where the light source includes at least one infrared light source, and the at least one infrared light source is used to emit an infrared detection light of a specific wavelength to the fingerprint detection area with a conical beam.

The optical fingerprint identification apparatus as described above, where the infrared light source includes a light emitting element and a light processing element for converging light, and the light processing element is a lens or a light condensing cover disposed on a light emitting surface of the light emitting element; or, the infrared light source is a vertical cavity surface emitting laser.

An embodiment of the present application provides an electronic device, which includes a liquid crystal display and an optical fingerprint identification apparatus, and the optical fingerprint identification apparatus is disposed under a backlight module of the liquid crystal display to realize under-screen optical fingerprint detection.

The embodiments of the present application provide an optical fingerprint identification apparatus and an electronic device, where the optical fingerprint identification apparatus is suitable for an electronic device with a liquid crystal display to realize under-screen optical fingerprint detection. The optical fingerprint identification apparatus includes a fingerprint identification module for being disposed under a backlight module of the liquid crystal display, and a fingerprint detection area thereof is at least partially located in a display area of the display. The fingerprint identification module includes an optical sensor and a light source disposed adjacent to the optical sensor; the light source is used to emit a detection light to the fingerprint detection area of the liquid crystal display, and the detection light passes through the liquid crystal display via a transmission part of the backlight module and irradiates to a finger above the liquid crystal display to form a fingerprint detection light carrying fingerprint information of the finger; and the optical sensor is used to receive the fingerprint detection light to acquire the fingerprint information of the finger; where, the fingerprint detection light passes through the liquid crystal display and is transmitted to the optical sensor via the transmission part of the backlight module. Since the light source is located at the bottom of the backlight module, and the space at the outer edge of the display module is not increased, and the chin area of the electronic device is reduced, improving the screen-to-body ratio of the electronic device.

### BRIEF DESCRIPTION OF THE DRAWINGS

In order to explain the embodiments of the present application or the technical solutions in the prior art more clearly, the drawings required in the description of the embodiments or the prior art will be briefly introduced below. Obviously, the drawings in the following description are some embodiments of the present application, and for those of ordinary skill in the art, other drawings can be obtained according to these drawings without creative efforts.
FIG.1 is a structural schematic diagram of an electronic device supporting under-screen optical fingerprint identification according to an embodiment of the present application;
FIG. 2 is a partial enlarged view of FIG. 1;
FIG. 3 is another structural schematic diagram of a light source in FIG. 2;
FIG. 4 is another structural schematic diagram of a support plate according to an embodiment of the present application;
FIG. 5 is another structural schematic diagram of a fingerprint identification module according to an embodiment of the present application;
FIG. 6 is a light emitting schematic diagram of the optical element in FIG. 5;
FIG. 7 is a structural schematic diagram of an optical fingerprint identification apparatus according to another embodiment of the present application;
FIG. 8 is a light emitting schematic diagram of the optical element in FIG. 7;
FIG. 9 is a layout diagram of an electronic device according to an embodiment of the present application;
FIG. 10 is another layout diagram of an electronic device according to an embodiment of the present application;
FIG. 11 is a flow chart of fingerprint identification in FIG. 10;
FIG. 12 is another layout diagram of an electronic device according to an embodiment of the present application; and
FIG. 13 is another layout diagram of an electronic device according to an embodiment of the present application.

### Description of reference signs:

100: display module;
110: fingerprint detection area;
200: backlight module;
210: transmission part;
220: support plate;
221: first through-hole;
222: second through-hole;
223: first light absorbing layer;
224: second light absorbing layer;
225: first light absorbing member;
226: second light absorbing member;
300: fingerprint identification module;
310: optical sensor;
320: light source;
321: light emitting element;
322: light processing element;
323: first light source;
324: second light source;
325: third light source;
330: light emitting group;
400: chin area;
500: circuit board;
600: middle frame;
610: first connecting hole;
620: second connecting hole;
630: third light absorbing layer;
cp: first angle;
H: first size;
L: interval between a light source and an optical sensor;
α: second angle.

### DESCRIPTION OF EMBODIMENTS

In order to make the objectives, technical solutions and advantages of the embodiments of the present application clearer, the technical solutions in the embodiments of the present application will be described clearly and completely in the following with reference to the drawings of the embodiments of the present application. Obviously, the embodiments described herein are part of the embodiments of the present application, but not all embodiments. Based on the embodiments of the present application, all other embodiments obtained by those of ordinary skill in the art without creative efforts belong to the protection scope of the present application.

Liquid Crystal Display (LCD) is a display screen widely used in electronic devices such as intelligent mobile terminals. LCD has many advantages such as thin body, power saving and no radiation, and it is also widely used in electronic products such as TVs, computers and mobile phones. LCD is a passive light emitting display device, and its display panel cannot emit light itself. Generally, a backlight module behind a display module needs to be used to illuminate the display panel to display an image.

In order to realize that an electronic device using LCD supports under-screen optical fingerprint identification, a light source is usually disposed on a side edge of a LCD, so that a light can irradiate to a fingerprint detection area.

However, for the aesthetics of a product, it is usually necessary to cover the light source by setting an opaque covering area which is usually called a chin area on an electronic product (this chin area can generally be used to set a circuit board of a liquid crystal display). Therefore, the way of disposing the light source on the side edge of the LCD mentioned above will cause the chin area of the electronic device to be too wide, which is not conductive to improving the screen-to-body ratio.

Therefore, the present application provides an optical fingerprint identification apparatus and an electronic device suitable for an LCD screen, to improve the screen-to-body ratio of an electronic device.

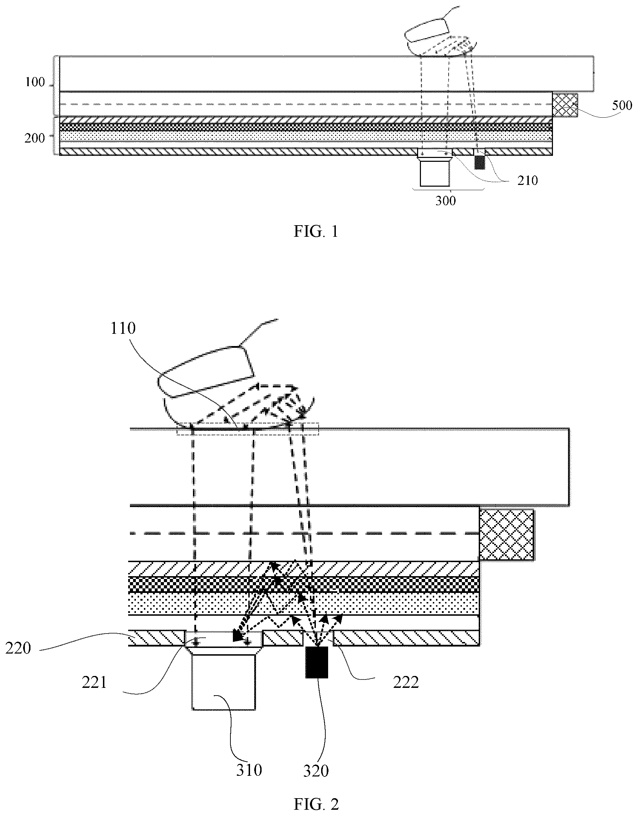

FIG. 1 is a structural schematic diagram of an electronic device supporting under-screen optical fingerprint identification according to an embodiment of the present application; and FIG. 2 is a partial enlarged view of FIG. 1.

Referring to FIG. 1 and FIG. 2, an electronic device provided in this embodiment, which may be a mobile phone, a tablet computer or other intelligent terminal with a liquid crystal display or other electronic device, includes a display module 100, a backlight module 200 and a fingerprint identification module 300; where the display module 100 has a fingerprint detection area 110 for a user to place a finger for fingerprint inputting; the backlight module 200 is located at the bottom of the display module 100; and the fingerprint identification module 300 is located at the bottom of the backlight module 200 away from the display module 100. The fingerprint identification module 300 includes an optical sensor 310 and a light source 320; the backlight module 200 has a transmission part 210 for allowing a light emitted by the light source 320 to pass through the backlight module 200 and irradiate to the fingerprint detection area 110 to be reflected, scattered or transmitted on the finger above the fingerprint detection area 100 to form a fingerprint detection light carrying fingerprint information, and allowing the fingerprint detection light formed on the finger and passing through the display module 100 to irradiate into the optical sensor 310 via the backlight module 200.

The display module 100 and the backlight module 200 may constitute a liquid crystal display. The display module 100 may include a display panel and a protective cover covering the display panel, the protective cover may be a glass cover or a sapphire cover, and the fingerprint detection area 110 may be at least a partial area of the protective cover. Where, the display panel may be a liquid crystal display panel, and more specifically, the fingerprint detection area 110 may be a sensing area of the optical sensor of the fingerprint identification module 300 in the protective cover, and the fingerprint detection area 110 is at least partially located in a display area of the liquid crystal display panel.

The backlight module 200 may be disposed at the bottom of the display module 100, that is, the display panel is away from the bottom of the backlight module; and the backlight module 200 can cooperate with the display module 100 to form a liquid crystal display. The backlight module 200 may be used for providing a uniform surface light source for the display panel, so as to enable the display panel to realize emitting light to display an image on the liquid crystal display.

The backlight module 200 is usually an opaque structure. In order to facilitate a normal operation of the fingerprint identification module 300, the backlight module 200 may be provided with a transmission part 210 for allowing light to pass through. The structure of the transmission part 210 may be various, for example, the transmission part 210 may be a through-hole or a transparent film for exposing the optical sensor 310 and the light source. More specifically, the backlight module 200 generally includes a backlight source and an optical film assembly, such as a light guide plate, a brightness enhancement film, a light homogenizing film, a reflector and a support plate (such as a steel plate), among which some optical films are opaque films or partially opaque films.

In an embodiment, the transmission part 210 of the backlight module 200 may specifically include a light transmitting through-hole or other light transmitting structure opened in an area of the support plate corresponding to the optical sensor 310 and the light source 320 of the fingerprint identification module. On the other hand, other optical films of the backlight module 200 may be films with different optical characteristics for light sources of different wavelength bands, such as a film with an optical characteristic of high transmittance for a detection light (such as an infrared light) emitted by the light source 320, and with an traditional optical characteristic of the films mentioned above for visible light, such as optical brightening, light homogenizing and atomizing, reflection, etc.

The fingerprint identification module 300 may include an optical sensor 310 and a light source 320, where the optical sensor 310 may be a sensor capable of implementing fingerprint identification. The optical sensor 310 may be disposed under the backlight module 200 away from the display module 100. Optionally, the optical sensor 310 may be located directly below the fingerprint detection area 110, that is, a straight line passing through a center of the optical sensor 310 and a center of the fingerprint detection area 110 may be perpendicular to the display module 100, which can reduce a light transmission path between the optical sensor 310 and the fingerprint detection area 110, and reduce the light consumption. Of course, in other embodiments, in order to improve the receiving performance of the optical sensor 310 for the fingerprint detection light, the center of the optical sensor 310 may be deviated from the center of the fingerprint detection area 110, that is, a connecting line between the center of the optical sensor 310 and the center of the fingerprint detection area 110 may have an included angle with a direction perpendicular to the display panel 100, realizing that the optical sensor 310 obliquely receives the fingerprint detection light. It may be disposed according to the actual situation.

The light source 320 is disposed under the backlight module 200 away from the display module 100, that is, the light source 320 may be disposed on one side of the optical sensor 310 and adjacent to the optical sensor 310. The light source 320 may include at least one infrared light source for emitting an infrared light of a specific wavelength. Where the specific wavelength may be 850nm or 940nm. The infrared light emitted by the light source may be used as the detection light for fingerprint detection, the detection light irradiates to the finger above the fingerprint detection area 110, and then penetrates the finger and is scattered in the finger, and the scattered light is transmitted from the finger surface to form the fingerprint detection light carrying fingerprint information of the finger. The fingerprint detection light may further pass through the display module 100 and the transmission part 210 of the backlight module 200 and be collected by the optical sensor 310. The shape of the light beam emitted by the light source 320 may be a conical beam, so as to enable at least part of the light beam to irradiate to the fingerprint detection area 110 via the transmission part 210.

The optical sensor 310 may be an optical imaging chip or an optical image sensor chip, and may also be called an optical optical sensor chip, which may be carried on a flexible circuit board and be electrically connected with the flexible circuit board through metal leads. The optical sensor 310 may specifically include an optical sensing array with multiple optical sensing units and an optical path guiding structure formed above the optical sensing array. The light path guiding structure is used for guiding the fingerprint detection light formed by irradiating the detection light emitted by the light source 320 to the finger and passing through the liquid crystal display to the optical sensing array. In addition, the optical sensor 310 may further include a filter for filtering out ambient light or other interference light entering the optical sensing array. For example, the filter may allow an infrared light signal with a wavelength band corresponding to that of the fingerprint detection light to pass through, while filtering out optical signals with other wavelength bands.

As a specific embodiment, the optical path guiding structure may include a macro lens with at least one spherical or aspherical lens and a lens cone or a lens holder for carrying the macro lens, the lens cone or the lens holder is disposed above the flexible circuit board and forms a closed space with the flexible circuit board, and the optical sensing array and the filter above the optical sensing array may be disposed in the closed space and be located in a converging optical path of the macro lens; where the macro lens is used for guiding or converging the fingerprint detection light transmitted through the backlight module 200 to the optical sensing array to realize optical fingerprint imaging of the finger on the optical sensing array.

As another specific embodiment, the optical path guiding structure may also be an optical path guiding layer formed above the optical sensing array by a semiconductor process, and the optical path guiding layer may include a microlens array and multiple light blocking layers located between the microlens array and the optical sensing array. The multiple light blocking layers define multiple transmission optical paths between the microlens array and the optical sensing array through openings, and each microlens of the microlens array may focus the fingerprint detection light to a corresponding transmission optical path of the microlens and transmit the fingerprint detection light to a corresponding optical sensing unit via the transmission optical path. Where, the filter may be directly formed above the optical sensing array or the optical path guiding structure by coating.

When the electronic device detects that a finger touches the fingerprint detection area, the light source 320 may emit an infrared detection light for fingerprint detection. The infrared detection light passes through the liquid crystal display and irradiates into the finger via the transmission part 210 corresponding to the light source 320, and passes through the surface of the finger after being transmitted or scattered by the finger, to form the fingerprint detection light carrying fingerprint information. The fingerprint detection light returns from the liquid crystal display and is further transmitted to the optical sensor 310 via the transmission part 210 corresponding to the optical sensor 310, and the optical sensor 310 receives the fingerprint detection light to acquire a fingerprint image or fingerprint information of the finger. In this embodiment, since the light source 320 is located at the bottom of the backlight module 200, the space at the outer edge of the display module is not increased, and the chin area of the electronic device is reduced, improving the screen-to-body ratio of the electronic device.

Referring to FIG. 2, in another embodiment, as an alternative of the transmission part 210, the backlight module 200 includes a support plate 220 disposed away from the display module 100, and other optical film assembly for supporting the backlight module 200, such as a light guide plate, a brightness enhancement film, a light homogenizing film, a reflector, etc. The transmission part 210 includes a first through-hole 221 and a second through-hole 222 which are formed in the support plate 220; and the positions of the first through-hole 221 and the second through-hole 222 correspond to the optical sensor 310 and the light source 320, respectively. The second through-hole 222 is used for allowing the infrared detection light emitted by the light source 320 to pass through the backlight module 200 and irradiate to the fingerprint detection area 110; and the first through-hole 221 is used for allowing the fingerprint detection light transmitted or scattered by the finger to irradiate into the optical sensor 310.

It can be understood that the backlight module 200 may include optical films such as a light guide plate, a reflective film, a brightness enhancement film (such as a prism film), and a light homogenizing film, to conduct light guide, reflecting, brightness enhancement, atomizing and homogenizing of the backlight. These structures may be stacked under the display panel, and the support plate 220 may be located at the bottom of the above structures, that is, the support plate 220 may be located at the bottom layer of the backlight module 200.

The support plate 220 is usually an opaque structure such as a steel plate. The transmission part 210 may be a first through-hole 221 and a second through-hole 222 disposed on the support plate 220. The first through-hole 221 and a second through-hole 222 have a simple structure and are easy to be implemented.

The second through-hole 222 may be disposed corresponding to the light source 320, and a cross-sectional area of the first through-hole 221 may be larger than an area of a light emitting surface of the light source 320, so as to enable the light emitted by the light source 320 to be emitted without being blocked. Of course, the second through-hole 222 may be disposed directly opposite to the light source 320, or may be disposed deviated from the light source 320 to allow the infrared detection light emitted by the light source 320 to obliquely irradiate into the fingerprint detection area 110, which may be specifically disposed according to the positional relationship between the fingerprint detection area 110 and the light source 320.

The first through-hole 221 may be disposed corresponding to the optical sensor 310, and a cross-sectional area of the first through-hole 221 may be larger than an area of a receiving surface of the optical sensor 310, so as to enable the transmitted or scattered light to irradiate into the receiving surface without being blocked. Of course, similar to the second through-hole 222, the first through-hole 221 may be disposed directly opposite to the optical sensor 310, or may be disposed deviated from the optical sensor 310 to allow the fingerprint detection light formed on the finger to be obliquely received by the optical sensor after passing through the liquid crystal, which may be specifically disposed according to the positional relationship between the fingerprint detection area 110 and the optical sensor 310.

Please continue to refer to FIG. 2, since the light beam emitted by the light source 320 is a conical beam, part of the light near the optical sensor 310 is easily reflected by each optical film in the backlight module 200 and directly irradiates into the optical sensor 310, and this part of the light does not pass through the finger, it is a useless light or an interference light, which easily affects the result of the fingerprint detection.

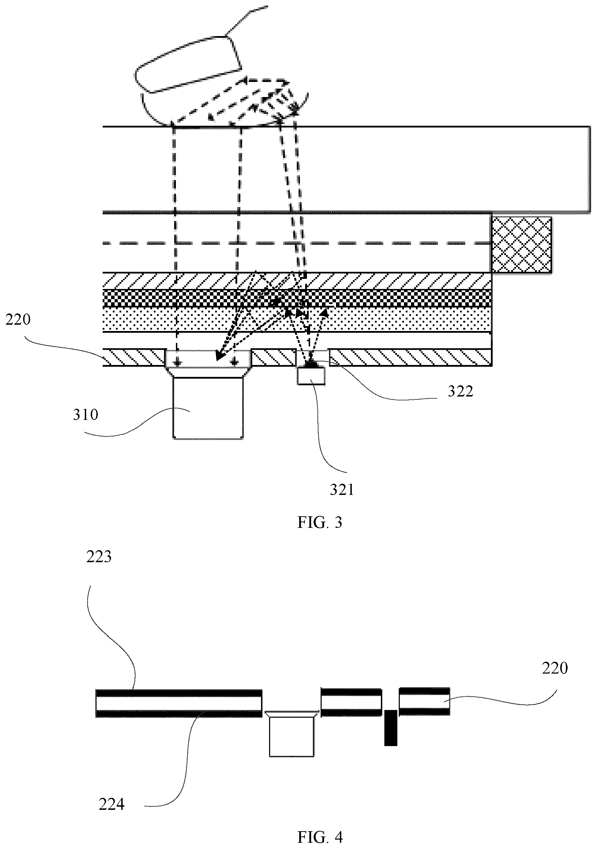

For this reason, the light source 320 is adjusted in this embodiment. FIG. 3 is another structural schematic diagram of the light source in FIG. 2. Referring to FIG. 3, the light source 320 includes a light emitting element 321 and a light processing element 322 located on the light emitting surface of the light emitting element 321; and the light processing element 322 is used for converging light.

Where the light emitting element 321 can constitute an infrared light source, and the light processing element 322 may be a lens or a light condensing cover disposed on the light emitting element 321. The light processing element 322 can realize converging light, thereby reducing an emitting angle of the conical beam, reducing the useless light, suppressing light leakage and improving the accuracy of fingerprint identification.

Of course, the light source 320 may also be a Vertical Cavity Surface Emitting Laser (VCSEL), which has a small light emitting angle and strong directionality, and can reduce the useless light, suppress light leakage and improve the accuracy of fingerprint identification.

FIG. 4 is another structural schematic diagram of a support plate according to an embodiment of the present application. Referring to FIG. 4, in another embodiment of the support plate 220, the surface of the support plate 220 facing the display module 100 is provided with a first light absorbing layer 223; and the first light absorbing layer 223 covers at least an area which is between the first through-hole 221 and the second through-hole 222 and is in the upper surface of the support plate 220.

Where the first light absorbing layer 223 may be a film layer made of a material capable of absorbing light, for example, a black material layer made of ink or the like.

The first light absorbing layer 223 may only be disposed in the area between the first through-hole 221 and the second through-hole 222, and absorb a light which is reflected by an optical film of the backlight module 200 and transmitted to the support plate 200 from the infrared detection light emitted by the light source 320, so as to reduce or avoid the interference light formed by a secondary reflection of the light on the support plate 220, thereby reducing the useless light entering into the optical sensor 310 and suppressing light leakage.

Optionally, the first light absorbing layer 223 may cover part of the upper surface of the support plate 220 in the middle of and around the first through-hole 221 and the second through-hole 222, that is, the orthographic projection of the first light absorbing layer 223 on the display module 100 may cover the orthographic projection of the hole walls of the first through-hole 221 and the second through-hole 222 on the display module 100, thereby further reducing the useless light entering the optical sensor 310 and suppressing light leakage.

In addition, optionally, the first light absorbing layer 223 may extend towards an edge of the support plate 220 and cover the entire upper surface of the support plate 220, that is, the first light absorbing layer 223 may be a whole layer structure covering the upper surface of the support plate 220, which is convenient for processing and conducive to improve the flatness of the backlight module 200.

As another implementation of the support plate 220, the surface of the support plate 220 away from the display module 100 is provided with a second light absorbing layer 224. The second light absorbing layer 224 covers at least an area which is between the first through-hole 221 and the second through-hole 222 and is in the lower surface of the support plate 220.

Where the second light absorbing layer 224 may be a film layer made of a material capable of absorbing light, for example, a black material layer made of ink or the like.

The second light absorbing layer 224 may only be disposed in the area between the first through-hole 221 and the second through-hole 222, so as to absorb a light which irradiates on the lower surface of the support plate 220 from the infrared detection light emitted by the light source 320, thereby preventing this part of light from reflecting on the lower surface of the support plate 220 to form an interference light and suppressing light leakage.

Optionally, the second light absorbing layer 224 may cover part of the lower surface of the support plate 220 in the middle of and around the first through-hole 221 and the second through-hole 222, that is, the orthographic projection of the first light absorbing layer 223 on the display module 100 may cover the orthographic projection of the hole walls of the first through-hole 221 and the second through-hole 222 on the display module 100, thereby further reducing the useless light entering the optical sensor 310 and suppressing light leakage.

In addition, optionally, the second light absorbing layer 224 may extend towards an edge of the support plate 220 and cover an entire lower surface of the support plate 220, that is, the second light absorbing layer 224 may be a whole layer structure covering the lower surface of the support plate 220, which is convenient for processing and conductive to improve the flatness of the backlight module 200.

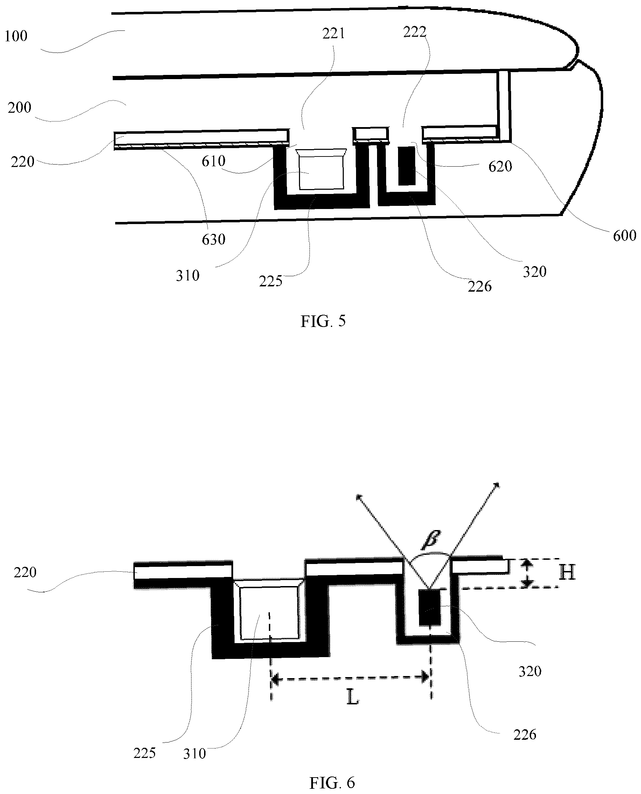

FIG. 5 is another structural schematic diagram of a fingerprint identification module according to an embodiment of the present application. Referring to FIG. 5, in another embodiment, a middle frame 600 is disposed at the bottom of the backlight module 200, and the middle frame 600 is mainly used for supporting and installing a liquid crystal display, and installing other functional components of the electronic device at the same time, such as a camera assembly and a circuit motherboard. The middle frame 600 may be provided with a first connecting hole 610 corresponding to the first through-hole 221 and a second connecting hole 620 corresponding to the second through-hole 222. The optical sensor 310 and the light source 320 are installed at a position of the middle frame 600 away from the backlight module 200 and correspond to the first connecting hole 610 and the second connecting hole 620, respectively. Where the first connecting hole 610 and the second connecting hole 620 may be grooves or through-holes. A third light absorbing layer 630 is disposed between the middle frame 600 and the support plate 220.

The middle frame 600 may include a bottom plate of the middle frame and a frame extending around the edges of the bottom plate; where the bottom plate of the middle frame is a plate-like structure and may be disposed under the support plate 220, and other components such as a battery may be disposed under the middle frame 600. The display module 100 is overlapped on the middle frame 600, and the backlight module 200 may be connected with the display module 100 through the support plate 220. The installation structure of the middle frame 300 and the liquid crystal display mentioned above creates a gap between the middle frame and the support plate 220, the third light absorbing layer 630 may be disposed in the gap, and the third light absorbing layer 630 may also be a film layer made of a material that absorbs light, thereby avoiding that the light irradiating into the optical sensor 310 through the gap and causing an interference to the optical sensor 310 receiving the fingerprint detection light.

Optionally, the lower surface of the middle frame 600 away from the backlight module 200 is provided with a first light absorbing member 225 which may be disposed at periphery of the optical sensor 310 and form, with the middle frame 600, a first accommodation cavity with the first connecting hole 610 as an opening, and the optical sensor 310 is disposed in the first accommodation cavity.

Where the first light absorbing member 225 may be a structure made of a material capable of absorbing light, for example, a black component made of ink or the like. The optical sensor 310 being disposed in the first accommodating cavity can prevent the light from entering the optical sensor 310 through the gap around the optical sensor 310, suppress light leakage, and further improve the accuracy of fingerprint detection.

In this embodiment, a bottom surface of the middle frame 600 away from the backlight module 200 is provided with a second light absorbing member 226 which may be disposed at periphery of the light source 320 and form, with the middle frame, a second accommodation cavity with the second connecting hole 620 as an opening, and the light source 320 is disposed in the second accommodation cavity.

The second light absorbing member 226 may be a structure made of a material capable of absorbing light, for example, a black component made of ink or the like. The light source 320 being disposed in the second accommodating cavity can prevent the light emitted by the light source 320 from entering the optical sensor 310 or other areas through the side of the light source 320 to form an interference light, suppress light leakage, and further improve the accuracy of fingerprint detection.

The first light absorbing member 225 and the second light absorbing member 226 may be two parts installed separately. Optionally, the first light absorbing member 225 and the second light absorbing member 226 are connected into a whole to form an integrated light absorbing assembly for accommodating the light source and the optical sensor, for example, they may be disposed by one-time filling, etc., which simplifies the processing steps.

FIG. 6 is a light emitting schematic diagram of the optical element in FIG. 5. Referring to FIG. 6, on the basis of the above embodiments, there is an interval with a first size H between the light emitting surface of the light source 320 and the upper surface of the support plate 220 close to the display module 100, and the interval H can limit a light emitting angle β of the light source 320, thereby reducing the useless light reflected by the backlight module 200 and suppressing light leakage.

Optionally, the first size H is less than 3 mm, and the size can satisfy the light emitting angle β and the installation size of the light source 320 and can suppress the light leakage phenomenon at the same time.

Optionally, an interval L between the light source 320 and the optical sensor 310 is 5-15 mm, and the interval can satisfy the overall size of the fingerprint identification module 300 and can suppress the light leakage phenomenon at the same time.

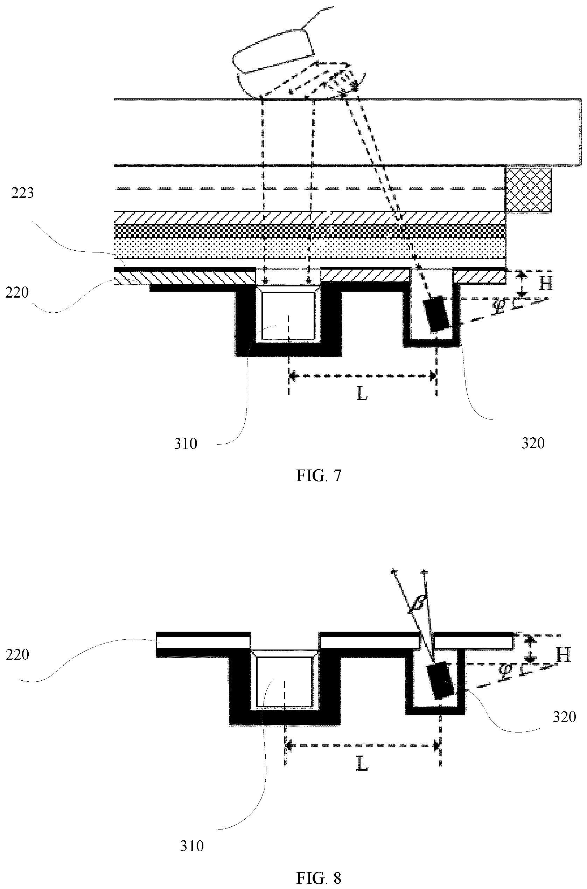

FIG. 7 is a structural schematic diagram of an optical fingerprint identification apparatus according to another embodiment of the present application. FIG. 8 is a light emitting schematic diagram of the optical element in FIG. 7.

Referring to FIG. 7 and FIG. 8, the light emitting surface of the light source 320 is inclined towards the direction close to the optical sensor 310, there is a first angle ϕ between an axis of the light source 320 and a first direction perpendicular to the support plate 220, and a receiving plane of the optical sensing array of the optical sensor 310 is perpendicular to the first direction.

In this embodiment, by disposing the light source 320 obliquely, the light emitted by the light source 320 can irradiate towards the fingerprint detection area 110 more concentratedly, which can appropriately reduce the size of the opening of the second through-hole 222, and can better limit the light emitting angle β of the light source 320, thereby suppressing light leakage.

Optionally, the first angle ϕ is less than 60°, so as to satisfy that the fingerprint detection light emitted by the light source 320 can irradiate into the fingerprint detection area 110 and suppress the light leakage phenomenon at the same time.

On the basis of the above embodiments, a number and layout of the light sources 320 may be various.

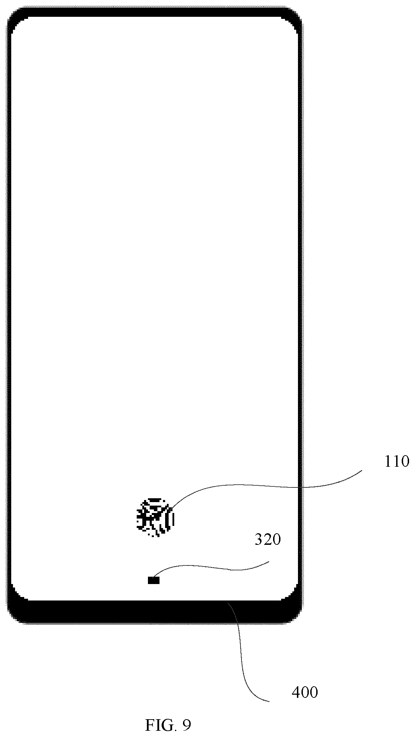

For example, FIG. 9 is a layout diagram of an electronic device according to an embodiment of the present application. Referring to FIG. 9, the number of the light sources 320 is one, that is, the light source 320 is a single light source 320, and the orthographic projection of the light source 320 on the display module 100 is located between the fingerprint detection area 110 and the connecting side of the circuit board 500 of the display module 100, that is, the single light source 320 is located between the fingerprint detection area 110 and the chin area of the electronic device, and the distance from the single light source to the center of the fingerprint detection area 110 ranges from 8 mm to 12 mm, preferably 10 mm.

It can be understood that the display panel is connected with a controller through the circuit board 500, and the circuit board 500 is disposed at the side edge of the display panel. In order to prevent the circuit board from being exposed, this area is usually covered by the covering area, that is, it is located in the chin area 400. The connecting side of the circuit board 500 of the display module is the position where the display module is close to the chin area 400.

The embodiment shown in FIG. 9 is provided with a light source 320, and the orthographic projection of the light source 320 on the display panel may be located between the fingerprint detection area 110 and the chin area 400, which is simple in structure.

The controller may be connected with the light source 320 and the optical sensor 310. When a finger touches the fingerprint detection area 110, the controller controls the light source 320 to emit detection light, controls the optical sensor 310 to collect a fingerprint, controls the light source 320 to turn off after the fingerprint is collected, and then match the collected fingerprint with a target fingerprint stored in the controller to complete fingerprint identification.

Of course, in some other layouts, the number of light sources 320 is multiple, and the multiple light sources 320 are disposed at intervals and are located around the fingerprint detection area 110 so as to emit detection lights to the fingerprint detection area 110 through multiple irradiation angles, respectively. The support plate 220 is provided with multiple second through-holes 222 corresponding to multiple light sources 320 one to one, and each second through-hole 222 is used for allowing the detection light emitted by a corresponding light source 320 to pass through and irradiate to the fingerprint detection area 110 at a preset angle. For fingerprint identification, a fingerprint has its directionality, and different placement angles of a finger may affect the detection effect. When a fingerprint line is perpendicular to the light direction, the detected fingerprint is relatively clear, and when a fingerprint line is parallel to the light direction, the effect of the detected fingerprint is poor, which is easy to cause a failure of identification. Therefore, multiple light sources 320 can compensate for the influence of placement angles of a finger on a fingerprint detection result.

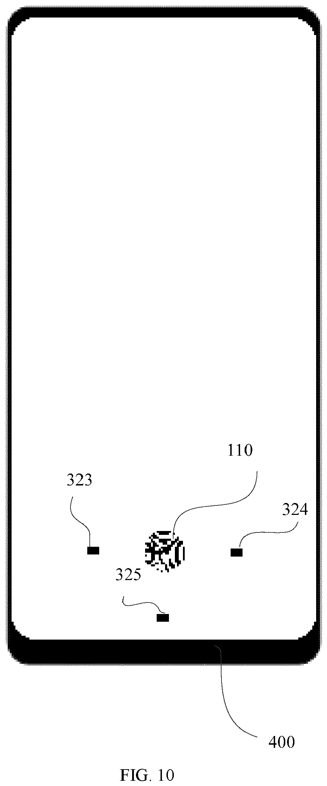

FIG. 10 is another layout diagram of an electronic device according to an embodiment of the present application. Referring to FIG. 10, multiple light sources 320 include a first light source 323, a second light source 324 and a third light source 325; and the first light source 323, the second light source 324, and the third light source 325 are disposed in a delta shape. Where the orthographic projection of the first light source 323 on the display module 100 and the orthographic projection of the second light source 324 on the display module 100 are located on opposite sides of the fingerprint detection area 110; the orthographic projection of the third light source 325 on the display module 100 is located between the fingerprint detection area 110 and the connecting side of the circuit board 500 of the display module 100 (the third light source 325 is located between the fingerprint detection area 110 and the chin area of the electronic device); and a connecting line between the first light source 323 and the second light source 324 extends along a lateral direction parallel to the chin region 400.

It can be understood that for the electronic device shown in FIG. 10, the lateral direction is the left-right direction in the figure, and the longitudinal direction is the up-down in the figure, the chin area 400 is located at one end of the electronic device in the longitudinal direction and extends along the lateral direction.

In this embodiment, a total of three light sources 320 are provided. The first light source 323 is located on the left side in the lateral direction, the second light source 324 is located on the right side in the lateral direction, and the third light source 325 may be located between the fingerprint detection area 110 and the chin area 400. Therefore, the light sources 320 can illuminate from three directions to overcome the problem of fingerprint directionality. Of course, the illuminating order of the left side and right side may be interchanged, which is not limited.

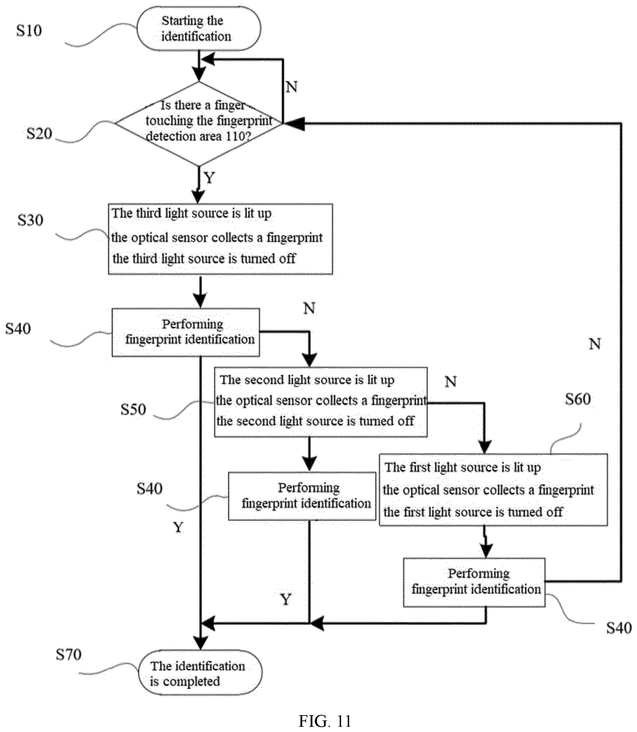

FIG. 11 is a flow chart of fingerprint identification in FIG. 10. Referring to FIG. 11, the optical fingerprint identification apparatus includes a controller connected with an optical sensor 310 and multiple light sources 320. The flow of the identification is as follows.

Step S10, starting the identification.

Step S20, detecting whether a finger touches the fingerprint detection area 110.

Specifically, in this embodiment, the liquid crystal display of the electronic device may be a liquid crystal touch display including a touch sensor, and the step S20 may be detecting whether a finger touches the fingerprint detection area 110 through the touch sensor. It can be understood that the touch detection mentioned above may also be detecting through other sensors. After detecting that a finger touches the fingerprint detection area 110, performing step S30: the controller controls the third light source 325 to light up, controls the optical sensor 310 to collect a first fingerprint, and controls the third light source 325 to turn off after the first fingerprint is collected.

Then, performing step S40, the controller matches the collected fingerprint (the first fingerprint) with a target fingerprint to perform fingerprint identification. Where, the target fingerprint may be a fingerprint template collected in a fingerprint registration stage and stored in the electronic device, and there may be one or more fingerprint templates. When there are multiple fingerprint templates, the step S40 mentioned above may be matching the first fingerprint with the multiple fingerprint templates one by one according to a priority order.

If the matching is successful, performing step S70, the identification is completed, and the fingerprint identification is ended.

If the matching is unsuccessful, performing step S50, the controller controls the second light source 324 to light up, controls the optical sensor 310 to collect a second fingerprint, and controls the second light source 324 to turn off after the second fingerprint is collected.

Then, performing the step S40, the controller matches the collected fingerprint (the second fingerprint) with the target fingerprint to perform fingerprint identification.

If the matching is successful, performing the step S70, the identification is completed, and the fingerprint identification is ended.

If the matching is unsuccessful, performing step S60, the controller controls the first light source 323 to light up, controls the optical sensor 310 to collect a third fingerprint, and controls the first light source 323 to turn off after the third fingerprint is collected.

Then, performing the step S40, the controller matches the collected fingerprint (the third fingerprint) with the target fingerprint to perform fingerprint identification.

If the matching is successful, performing the step S70, the identification is completed, and the fingerprint identification is ended.

If the matching is unsuccessful, performing the step S20 again.

In this embodiment, the multiple light sources 320 can illuminate in sequence in time sharing. When the layout is the structure of Figure 9, they can illuminate from the bottom for fingerprint identification, and if the identification is unsuccessful, they can illuminate from the right side for fingerprint identification, and if the identification is still unsuccessful, they can illuminate from the left side for fingerprint identification, so that the problem of fingerprint directionality can be overcome and the reliability of fingerprint identification can be improved.

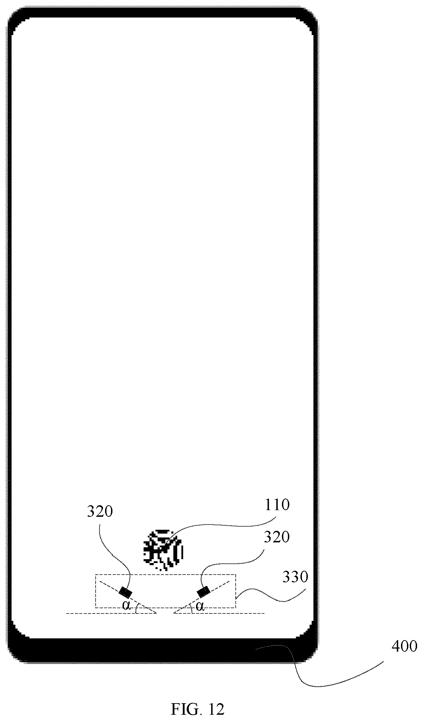

FIG. 12 is another layout diagram of an electronic device according to an embodiment of the present application. Referring to FIG. 12, the fingerprint identification module 300 includes at least one light emitting group 330; each light emitting group 330 includes at least two light sources 320 disposed at intervals; and the main light emitting angle of each light source 320 is set towards the fingerprint detection area 110.

Where, the position of the light emitting group 330 may be various. Taking FIG. 12 as an example, the electronic device has a single light emitting group 330 provided with two light sources 320, and the orthographic projections of the two light sources 320 on the display module 100 are located between the fingerprint detection area 110 and the connecting side of the circuit board 500 of the display module 100 (i.e., the two light sources 320 are located between the fingerprint detection area 110 and the chin area of the electronic device). At least two light sources 320 are disposed at intervals along a lateral direction of the electronic device, that is, disposed at intervals along a direction parallel to the chin area 400 of the electronic device.

Since the light source 320 emits a conical beam, the light emitting angle of the light beam is different in each section perpendicular to the light emitting surface, and the main light emitting angle may be the light emitting angle on the section with the strongest light intensity among the sections perpendicular to the light emitting surface of the light source 320. Assuming that the surface shown in the figure is a horizontal surface, by adjusting the angle of the light source 320 in the horizontal plane, the main light emitting angle can face the fingerprint detection area 110, that is, the section with the strongest light intensity can pass through the fingerprint detection area 110, so as to provide sufficient light for fingerprint detection. In addition, each light emitting group 330 is lit up and illuminates as a whole at the same time, and disposing at least two light sources in each light emitting group 330 can further increase the range of light irradiation angle and the number of lights, and improve the accuracy of fingerprint identification.

Of course, in other embodiments, such as other layouts in FIG. 8 and FIG. 9, a rotating light source 320 can be used to make the main light emitting angle face the fingerprint detection area 110, so as to provide sufficient light for fingerprint detection.

Optionally, in FIG. 12, the number of the light sources 320 in each light emitting group 330 is two, and a second angle α between each light source 320 and the lateral direction is less than 10°, so as to avoid that the lights emitted by the two light sources 320 irradiates to each other and thus interfere with each other.

In addition, an interval between two adjacent light sources in each group is 5-10 mm, so as to avoid that the lights emitted by the two light sources 320 irradiates to each other and thus interfere with each other.

It can be understood that the number and position of the light emitting group 330 and the number of light sources in the light emitting group 330 may be disposed according to actual situation.

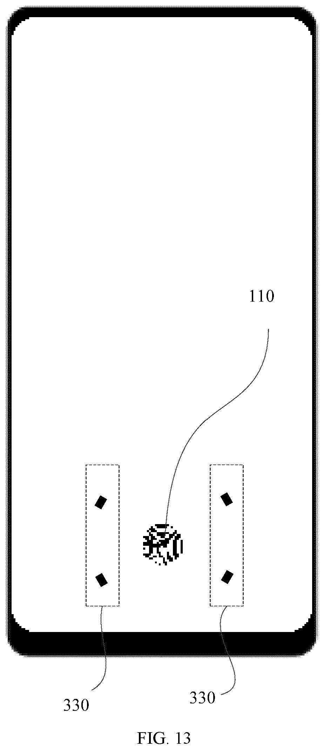

FIG. 13 is another layout diagram of an electronic device according to an embodiment of the present application. Referring to FIG. 13, the light source 320 specifically includes two light emitting groups 330, the two light emitting groups 330 are disposed at intervals along an lateral direction of the optical fingerprint identification apparatus and are respectively located at two opposite sides of the fingerprint detection area, and at least two light sources of each light emitting group 330 are disposed at intervals along a longitudinal direction of the electronic device.

The structure in FIG. 13 may be formed by rotating the light emitting group in FIG. 12 by 90°, and the two light emitting groups 330 may light up in time-sharing, so as to improve the reliability of fingerprint identification. In addition, for a mobile phone, the chin area 400 usually needs to be provided with structures such as a charging hole, a sound cavity, and the space for installing the light emitting group is small. The two light emitting groups 330 being disposed on the left and right sides of the fingerprint detection area 110 can make the installation space enough to facilitate the connection with the middle frame.

As an illuminating control flow of the light emitting group 330 in this embodiment, the optical fingerprint identification apparatus includes a controller which is connected with the optical sensor 310 and at least one light emitting group. The controller is used for controlling all the light sources 320 in one light emitting group 330 to light up at the same time when detecting that a finger touches the fingerprint detection area, controlling the optical sensor 310 to perform fingerprint collecting, and controlling the light source 320 to turn off after a fingerprint is collected. The controller is further used for matching the collected fingerprint with a target fingerprint. If the matching is unsuccessful and there is a unlit light emitting group 330, the controller controls all the light sources 320 in the next light emitting group 330 to light up at the same time, and perform fingerprint collecting and fingerprint matching, until fingerprint matching is successful or all light emitting group 330 have been lit up. If all light emitting groups 330 have been lit up and the fingerprint matching is unsuccessful, it is determined again whether a finger touches the fingerprint detection area 110, so as to improve the reliability of fingerprint identification.

For example, referring to the layout in FIG. 13, the fingerprint identification module 300 may include a first light emitting group (i.e., the light emitting group 330 located on the right side of the fingerprint detection area 110) and a second light emitting group (i.e., the light emitting group 330 located on the left side of the fingerprint detection area 110), and the first light emitting group and the second light emitting group respectively include at least two light sources. Where, the controller may control all light sources in the first light emitting group to light up at the same time when detecting that a finger touches the fingerprint detection area, control the optical sensor to perform fingerprint collecting to acquire a first fingerprint, and control all light sources to turn off after the first fingerprint is collected. After the matching between the first fingerprint and a target fingerprint is failed, the controller may control all light sources in the second light emitting group to light up at the same time, control the second light emitting group to perform fingerprint collecting to acquire a second fingerprint, and control all light sources in the second light emitting group to turn off after the second fingerprint is collected. If the matching between the second fingerprint and the target fingerprint is still unsuccessful, it is determined again whether a finger touches the fingerprint detection area 110.

It can be understood that multiple light sources 320 in each light emitting group 330 may be lit up as a whole at the same time, while for the multiple light emitting groups 330, they may be lit up in sequence. That is, one of the multiple light emitting groups 330 is lit up and illuminates first for fingerprint identification, and if the matching is unsuccessful, the next light emitting group 330 is lit up, until the matching is successful or all light emitting groups 330 have been lit up. In the above embodiment, it is explained by taking that the first light emitting group on the right side is lit up first and then the second light emitting group on the left side is lit up as an example. It can be understood that in other embodiments, the lighting order of the left and right sides may be interchanged, that is, the second lighting group may be lit up first and then the first lighting group may be lit up, which is not limited here.

The embodiment of the present application further provides an optical fingerprint identification apparatus which may specifically include a fingerprint identification module 300, i.e., a light source 320 and an optical sensor 310. For the installation method of the optical fingerprint identification apparatus in the electronic device, the description in the above embodiments may be specifically referred to.

The embodiment further provides an electronic device, which includes a liquid crystal display and an optical fingerprint identification apparatus, and the optical fingerprint identification apparatus is disposed under a backlight module of the liquid crystal display to realize under-screen optical fingerprint detection.

Where, the electronic device may be a mobile phone, a tablet computer and other electronic device. The liquid crystal display may include a display module 100 and a backlight module 200, which may specifically refer to the above embodiments. The structure and function of the optical fingerprint identification apparatus are the same as those in the above embodiments, and will not be repeated here.

When the electronic device detects that a finger touches the fingerprint detection area, the light source 320 may emit an infrared detection light for fingerprint detection, the infrared detection light passes through the liquid crystal display and irradiates into the finger via the transmission part 210 corresponding to the light source 320, and passes through the surface of the finger after being transmitted or scattered by the finger, to form the fingerprint detection light carrying fingerprint information. The fingerprint detection light returns from the liquid crystal display and is further transmitted to the optical sensor 310 via the transmission part 210 corresponding to the optical sensor 310, and the optical sensor 310 receives the fingerprint detection light to acquire a fingerprint image or fingerprint information of the finger. In this embodiment, since the light source 320 is located at the bottom of the backlight module 200, the space at the outer edge of the display module is not increased, and the chin area of the electronic device is reduced, improving the screen-to-body ratio of the electronic device.

The terms "first", "second", "third", "fourth", etc. (if there any) in the specification, claims and the above drawings of the present application are used for distinguishing similar objects, and are not necessarily used for describing a specific order or sequence. It should be understood that the data used in this way may be interchanged under appropriate circumstances, so that the embodiments of the present application described herein, for example, can be implemented in an order other than those illustrated or described herein. In addition, the terms "including" and "having" and any variations thereof are intended to cover non-exclusive inclusion, for example, a process, a method, a system, a product or a device including a series of steps or units is not necessarily limited to those steps or units explicitly listed, but may include other steps or units not explicitly listed or inherent to the process, the method, the product or the device.

Those of ordinary skill in the art can understand that all or some of the steps for implementing the method embodiments mentioned above may be completed by hardware related to program instructions. The aforementioned program may be stored in a computer readable storage medium. When the program is executed, the steps included in the method embodiments mentioned above are executed. The aforementioned storage medium includes various media which can store program codes, such as a ROM, a RAM, a magnetic disk or an optical disk, etc.

Finally, it should be noted that the above embodiments are only used for illustrating the technical solutions of the present invention, but not to limit them. Although the present invention has been described in detail with reference to the aforementioned embodiments, those of ordinary skill in the art should understand that the technical solutions described in the aforementioned embodiments may be modified, or some or all of the technical features may be equivalently substituted, and these modifications or substitutions do not deviate the essence of the corresponding technical solutions from the scope of the technical solutions of the embodiments of the present invention.

## Claims

1. An optical fingerprint identification apparatus, wherein the optical fingerprint identification apparatus is suitable for an electronic device with a liquid crystal display to realize under-screen optical fingerprint detection, and comprises a fingerprint identification module for being disposed under a backlight module of the liquid crystal display, and a fingerprint detection area thereof is at least partially located in a display area of the display;
wherein the fingerprint identification module comprises an optical sensor and a light source disposed adjacent to the optical sensor; wherein the light source is used to emit a detection light to the fingerprint detection area of the liquid crystal display, the detection light passes through the liquid crystal display via a transmission part of the backlight module and irradiates to a finger above the liquid crystal display to form a fingerprint detection light carrying fingerprint information of the finger; and the optical sensor is used to receive the fingerprint detection light to acquire the fingerprint information of the finger; wherein, the fingerprint detection light passes through the liquid crystal display and is transmitted to the optical sensor via the transmission part of the backlight module.

2. The optical fingerprint identification apparatus according to claim 1, wherein the optical sensor is used to be carried on a flexible circuit board and electrically connected with the flexible circuit board, and the optical sensor comprises: an optical sensing array with multiple optical sensing units; and an optical path guiding structure formed above the optical sensing array; wherein the optical path guiding structure is used to guide the fingerprint detection light passing through the liquid crystal display to the optical sensing array.

3. The optical fingerprint identification apparatus according to claim 2, wherein the optical path guiding structure comprises: a macro lens with at least one spherical or aspherical lens; and a lens cone or a lens holder for carrying the macro lens; wherein the lens cone or the lens holder is disposed above the flexible circuit board and forms a closed space with the flexible circuit board, and the optical sensing array is disposed in the closed space and is located in a converging optical path of the macro lens; wherein the macro lens is used to guide or converge the fingerprint detection light transmitted through the liquid crystal display to the optical sensing array to realize optical fingerprint imaging of the finger on the optical sensing array.

4. The optical fingerprint identification apparatus according to claim 2, wherein the optical path guiding structure comprises an optical path guiding layer formed above the optical sensing array by a semiconductor process, the optical path guiding layer comprises: a microlens array; and multiple light blocking layers located between the microlens array and the optical sensing array; wherein the multiple light blocking layers respectively define multiple transmission optical paths between the microlens array and the optical sensing array through openings, and each microlens of the microlens array is used to focus the fingerprint detection light to a corresponding transmission optical path of the microlens and transmit the fingerprint detection light to a corresponding optical sensing unit via the transmission optical path.

5. The optical fingerprint identification apparatus according to claim 4, wherein the optical sensor further comprises a filter, and the filter is formed above the optical sensing array or the optical path guiding structure by coating and is used to filter out an interference light entering the optical sensing array.

6. The optical fingerprint identification apparatus according to claim 1, wherein the transmission part of the backlight module comprises: a first through-hole; and a second through-hole; wherein the first through-hole and the second through-hole are formed on a support plate of the backlight module, and correspond to the optical sensor and the light source, respectively; wherein, the detection light emitted by the light source enters the backlight module via the second through-hole and irradiates to the fingerprint detection area to form the fingerprint detection light on the finger, and the fingerprint detection light is transmitted to the optical sensor via the first through-hole.

7. The optical fingerprint identification apparatus according to claim 6, wherein a first light absorbing layer is formed on an upper surface of the support plate, and the first light absorbing layer covers at least an area which is between the first through-hole and the second through-hole and is in the upper surface of the support plate.

8. The optical fingerprint identification apparatus according to claim 7, wherein the first light absorbing layer is a film layer formed of a material that absorbs light, and is used to absorb a light which is reflected by an optical film of the backlight module to the support plate from the detection light emitted by the light source, so as to reduce an interference light formed by a secondary reflection of the light on the support plate.

9. The optical fingerprint identification apparatus according to claim 8, wherein the first light absorbing layer extends toward an edge of the support plate and covers an entire upper surface of the support plate.

10. The optical fingerprint identification apparatus according to claim 6, wherein a second light absorbing layer is formed on a lower surface of the support plate, and the second light absorbing layer covers at least an area which is between the first through-hole and the second through-hole and is in the lower surface of the support plate.

11. The optical fingerprint identification apparatus according to claim 10, wherein the second light absorbing layer is a film layer formed of a material that absorbs light, and is used to absorb a light which irradiates on the lower surface of the support plate from the detection light emitted by the light source, so as to reduce an interference light formed by a reflection of the light on the lower surface of the support plate.

12. The optical fingerprint identification apparatus according to claim 11, wherein the second light absorbing layer extends toward an edge of the support plate and covers an entire lower surface of the support plate.

13. The optical fingerprint identification apparatus according to claim 6, wherein the optical sensor and the light source are installed at a position of a middle frame of the electronic device away from the backlight module, and the middle frame is provided with a first connecting hole corresponding to the first through-hole and a second connecting hole corresponding to the second through-hole; wherein the first connecting hole is used to allow the fingerprint detection light to enter the optical sensor through the middle frame, and the second connecting hole is used to allow the detection light emitted by the light source to irradiate to the fingerprint detection area through the middle frame.

14. The optical fingerprint identification apparatus according to claim 13, wherein there is a gap between the middle frame and the support plate, and the gap is provided with a third light absorbing layer which is a film layer formed of a material that absorbs light and is used to absorb an interference light entering the optical sensor via the gap.

15. The optical fingerprint identification apparatus according to claim 14, wherein the lower surface of the middle frame is provided with a first light absorbing member which is used to be disposed at periphery of the optical sensor and forms, with the middle frame, a first accommodation cavity with the first connecting hole as an opening, and the optical sensor is disposed in the first accommodation cavity.

16. The optical fingerprint identification apparatus according to claim 15, wherein a bottom surface of the middle frame is provided with a second light absorbing member which is used to be disposed at periphery of the light source and forms, with the middle frame, a second accommodation cavity with the second connecting hole as an opening, and the light source is disposed in the second accommodation cavity.

17. The optical fingerprint identification apparatus according to claim 16, wherein the first light absorbing member and the second light absorbing member are connected into a whole to form an integrated light absorbing assembly for accommodating the light source and the optical sensor.

18. The optical fingerprint identification apparatus according to any one of claims 6-17, wherein a light emitting surface of the light source is inclined towards a direction close to the optical sensor, there is a first angle between an axis of the light source and a first direction perpendicular to the support plate, and a receiving plane of the optical sensor is perpendicular to the first direction.

19. The optical fingerprint identification apparatus according to claim 18, wherein the first angle is less than 60°.

20. The optical fingerprint identification apparatus according to any one of claims 6-17, wherein there is an interval with a first size between a light emitting surface of the light source and an upper surface of the support plate, and the first size is less than 3 mm.

21. The optical fingerprint identification apparatus according to any one of claims 6-17, wherein an interval between the light source and the optical sensor is 5-15 mm.

22. The optical fingerprint identification apparatus according to claim 1, wherein the optical sensor is disposed directly below the fingerprint detection area to realize receiving, in a vertical way, the fingerprint detection light passing through the liquid crystal display.

23. The optical fingerprint identification apparatus according to claim 1, wherein a center of the optical sensor is deviated from a center of the fingerprint detection area to realize receiving, through a tilt angle, the fingerprint detection light passing through the liquid crystal display.

24. The optical fingerprint identification apparatus according to any one of claims 6-17, wherein the light source is a single light source, and the single light source is located between the fingerprint detection area and a chin area of the electronic device, and a distance from the single light source to a center of the fingerprint detection area ranges from 8 mm to 12 mm.

25. The optical fingerprint identification apparatus according to any one of claims 6-17, wherein,
a number of the light source is multiple, and the multiple light sources are disposed at intervals and are located around the fingerprint detection area, so as to respectively emit a detection light to the fingerprint detection area through a different irradiation angle; the support plate is correspondingly formed with multiple second through-holes, and each second through-hole is used to allow a detection light emitted by a corresponding light source to pass through and irradiate to the fingerprint detection area at a preset angle.

26. The optical fingerprint identification apparatus according to claim 25, wherein the light source comprises a first light source, a second light source and a third light source, wherein the first light source, the second light source and the third light source are disposed in a delta shape;
the first light source and the second light source are located at opposite sides of the fingerprint detection area; and
the third light source is located between the fingerprint detection area and the chin area of the electronic device.

27. The optical fingerprint identification apparatus according to claim 26, further comprising a controller connected with the optical sensor and the multiple light sources, wherein
the controller is configured to control the third light source to light up when detecting that a finger touches the fingerprint detection area, control the optical sensor to perform fingerprint collecting to acquire a first fingerprint, and control the third light source to turn off after the first fingerprint is collected;
the controller is further configured to control the second light source to light up when the first fingerprint is unsuccessfully matched with a target fingerprint, control the optical sensor to perform fingerprint collecting to acquire a second fingerprint, and control the second light source to turn off after the second fingerprint is collected; and
the controller is further configured to control the first light source to light up when the second fingerprint is unsuccessfully matched with the target fingerprint, control the optical sensor to perform fingerprint collecting to acquire a third fingerprint, and control the first light source to turn off after the third fingerprint is collected.

28. The optical fingerprint identification apparatus according to claim 25, wherein the fingerprint identification module comprises at least one light emitting group; wherein
each light emitting group comprises at least two light sources disposed at intervals; and
a main light emitting angle of each light source is set towards the fingerprint detection area, wherein an interval between two adjacent light sources ranges from 5 to 10 mm.

29. The optical fingerprint identification apparatus according to claim 28, wherein the light emitting group is between the fingerprint detection area and a chin area of the electronic device, and at least two light sources of the light emitting group are disposed at intervals along a lateral direction parallel to the chin area of the electronic device; wherein a second angle between each light source and the lateral direction is less than 10°.

30. The optical fingerprint identification apparatus according to claim 28, wherein the fingerprint identification module comprises two light emitting groups, the two light emitting groups are disposed at intervals along a lateral direction parallel to a chin area of the electronic device and are respectively located at two opposite sides of the fingerprint detection area, and at least two light sources of each light emitting group are disposed at intervals along a longitudinal direction perpendicular to the chin area of the electronic device.

31. The optical fingerprint identification apparatus according to claim 28, further comprising a controller, wherein the optical fingerprint module comprises a first light emitting group and a second light emitting group, and the controller is connected with the optical sensor, the first light emitting group and the second light emitting group; wherein
the controller is configured to control all light sources in the first light emitting group to light up at the same time when detecting that a finger touches the fingerprint detection area, control the optical sensor to perform fingerprint collecting to acquire a first fingerprint, and control all light sources in the first light emitting group to turn off after the first fingerprint is collected; and
the controller is further configured to control all light sources in the second light emitting group to light up at the same time when the first fingerprint is unsuccessfully matched with a target fingerprint, control the second light emitting group to perform fingerprint collecting to acquire a second fingerprint, and control all light sources in the second light emitting group to turn off after the second fingerprint is collected.

32. The optical fingerprint identification apparatus according to claim 1, wherein the light source comprises at least one infrared light source, and the at least one infrared light source is used to emit an infrared detection light of a specific wavelength to the fingerprint detection area with a conical beam.

33. The optical fingerprint identification apparatus according to claim 32, wherein the infrared light source comprises a light emitting element and a light processing element for converging light, and the light processing element is a lens or a light condensing cover disposed on a light emitting surface of the light emitting element; or, the infrared light source is a vertical cavity surface emitting laser.

34. An electronic device, comprising a liquid crystal display and the optical fingerprint identification apparatus according to any one of claims 1-33, wherein the optical fingerprint identification apparatus is disposed under a backlight module of the liquid crystal display to realize under-screen optical fingerprint detection.
